# EUROPEAN PATENT APPLICATION

(11) **EP 3 282 145 A1**
(43) Date of publication of application: **14.02.2018**
(21) Application number: 17185617.2
(22) Date of filing: 09.08.2017
(51) Int. Cl.: F16H 1/14

(54) **GEAR ASSEMBLY AND MANUFACTURING METHOD THEREOF**

(30) Priority: 09.08.2016 JP 2016156276
(71) Applicant: TOYOTA JIDOSHA KABUSHIKI KAISHA, Toyota-shi, Aichi 471-8571 (JP)
(72) Inventor: ISHIBASHI, Masayuki, Toyota-shi, Aichi 471-8571 (JP); FUNAHASHI, Makoto, Toyota-shi, Aichi 471-8571 (JP); OKAMOTO, Daisuke, Toyota-shi, Aichi 471-8571 (JP)
(74) Representative: D Young & Co LLP

(57) **Abstract**

A gear assembly that can prevent a reduction in power transmission efficiency and a manufacturing method thereof are provided. The gear assembly (1) comprises a first gear (3) and a second gear (5). The gear assembly (1) is designed in such a manner that first gear tooth (7) and the second gear tooth (9) are contacted properly to each other in a plane of action when operated in a predetermined condition. A rigidity reducing portion (10, 11) is formed on a first base portion (6) to avoid improper contact in the plane of action when the gear assembly (1) is operated in a different condition.

## Description

### CROSS REFERENCE TO RELATED APPLICATION

The present invention claims the benefit of Japanese Patent Application No. 2016-156276 filed on August 9, 2016 with the Japanese Patent Office, the disclosures of which are incorporated herein by reference in its entirety.

### BACKGROUND

### Field of the Invention

Embodiments of the present disclosure relate to a gear assembly including a pair of gears meshing with each other, and a manufacturing method thereof.

### Discussion of the Related Art

JP-A-2011-179565 describes a gear assembly having a pair of gears meshing with each other. According to the teachings of JP-A-2011-179565, each gear comprises a hub fitted onto a shaft and a rim connected to the hub, and an alteration of a contact point between tooth faces of the gears resulting from deflection of shafts is absorbed by a warpage of the rim.

JP-A-2007-285327 and JP-A-2007-205480 individually describe a gear assembly in which backlash between gears is reduced. In each of the gear assemblies taught by JP-A-2007-285327 and JP-A-2007-205480, a top face of each tooth of the gear is tapered, and the gear is pushed in an axial direction by an elastic member.

In the conventional art, gear tooth surfaces are designed to achieve a good tooth contact condition in accordance with an expected operating condition. In the conventional art, therefore, transmission efficiency of the gears may become less efficient if the operating condition changes. Such reduction in the transmission efficiency may be avoided by applying the rim taught by JP-A-2011-179565 to the gear. However, the rim taught by JP-A-2011-179565 may not be applied to all kinds of gears while fulfilling all the requirements of the gears such as rigidity, transmission torque etc. In addition, manufacturing cost of gears may be increased as a result of introducing the rim taught by JP-A-2011-179565.

### SUMMARY

Aspects of embodiments of the present disclosure have been conceived noting the foregoing technical problems, and it is therefore an object of embodiments of the present invention is to provide a gear assembly that can prevent a reduction in power transmission efficiency and a manufacturing method for manufacturing the gear assembly by simple procedures.

According one aspect of the present disclosure, there is provided a gear assembly comprising: a first gear including a first base portion, and first gear teeth formed on the first base portion; and a second gear including a second base portion, and second gear teeth formed on the second base portion. The first base portion of the first gear is arranged around a first shaft member, and the second base portion of the second gear is arranged around a second shaft in such a manner that the second gear teeth are meshed with the first gear teeth. The gear assembly is designed in such a manner that the first gear tooth and the second gear tooth are contacted to each other in the most preferable condition in a plane of action when operated in a predetermined condition. A rigidity reducing portion is formed on the first base portion to avoid an increase in a contact area between a tooth flank of the first gear tooth and the second gear tooth in the plane of action when the gear assembly is operated in a condition different from the predetermined condition.

In a non-limiting embodiment, rigidity of the rigidity reducing portion formed on the first base portion may be lower than rigidity of the second base portion of the second gear.

In a non-limiting embodiment, the rigidity reducing portion may be formed of material with lower Young's modules than that of the remaining portion of the first base portion.

In a non-limiting embodiment, section modules of the rigidity reducing portion is lower than that of the remaining portion of the first base portion.

In a non-limiting embodiment, the rigidity reducing portion may be formed on the first base portion in such a manner as to partially reduce a thickness of the first base portion.

In a non-limiting embodiment, the rigidity reducing portion may include a groove, and the groove may be formed on at least one of faces of the first base portion.

In a non-limiting embodiment, a pressure angle error of each of the first gear teeth may be individually adjusted in such a manner that a contact area between the tooth flank of the first gear tooth and the second gear tooth in the plane of action becomes larger than a contact area between the tooth face of the first gear tooth and the second gear tooth in the plane of action when the gear assembly is operated in the condition different from the predetermined condition.

In a non-limiting embodiment, a thickness of the tooth flank of each of the first gear teeth may be individually increased from the thickness designed to be operated in the predetermined condition, or a thickness of the tooth face of each of the first gear teeth may be individually decreased from the thickness designed to be operated in the predetermined condition.

In a non-limiting embodiment, a pressure angle error of each of the second gear teeth may be individually adjusted in such a manner that a contact area between the tooth face of the second gear tooth and the first gear tooth in the plane of action becomes larger than a contact area between the tooth flank of the second gear tooth and the first gear tooth in the plane of action when the gear assembly is operated in the condition different from the predetermined condition.

In a non-limiting embodiment, a thickness of the tooth flank of each of the second gear teeth may be individually decreased from the thickness designed to be operated in the predetermined condition, or a thickness of the tooth face of each of the second gear teeth may be individually increased from the thickness designed to be operated in the predetermined condition.

According one aspect of the present disclosure, there is provided a manufacturing method of a gear assembly, in which first gear teeth of a first gear arranged on a first shaft and second gear teeth of a second gear arranged on a second shaft are meshed to transmit power, comprising: forming the first gear and the second gear in such a manner that the first gear tooth and the second gear tooth are contacted to each other in the most preferable condition in a plane of action when operating the gear assembly in a predetermined condition; comparing a contact area between a tooth flank of the first gear tooth and the second gear tooth in a plane of action to a contact area between a tooth face of the first gear tooth and the second gear tooth in the plane of action, while operating the gear assembly in a condition different from the predetermined condition; and thereafter forming a rigidity reducing portion on a first base portion of the first gear formed around the first shaft, in a case that the contact area between the tooth flank of the first gear tooth and the second gear tooth in the plane of action is larger than the contact area between the tooth face of the first gear tooth and the second gear tooth in the plane of action; or forming the rigidity reducing portion on a second base portion of the second gear formed around the second shaft, in a case that the contact area between the tooth flank of the first gear tooth and the second gear tooth in the plane of action is smaller than the contact area between the tooth face of the first gear tooth and the second gear tooth in the plane of action.

In a non-limiting embodiment, the rigidity reducing portion may be formed by reducing a thickness of the first base portion or the second base portion.

Thus, according to the embodiments of the present disclosure, the gear assembly is designed in such a manner that the first gear tooth and the second gear tooth are contacted to each other in the most preferable condition in a plane of action when operated in a predetermined condition. In addition, the rigidity reducing portion is formed on the first base portion. According to the embodiments of the present disclosure, therefore, an increase in the contact area between the tooth flank of the first gear tooth and the second gear tooth in the plane of action may be avoided even if the gear assembly is operated in a condition different from the predetermined condition. For this reason, reduction in the transmission efficiency of the gear assembly can be prevented by thus reducing the rigidity of only one of the gears while maintaining the preferable rigidity of the gear assembly.

### BRIEF DESCRIPTION OF THE DRAWINGS

Features, aspects, and advantages of exemplary embodiments of the present invention will become better understood with reference to the following description and accompanying drawings, which should not limit the invention in any way.
Fig. 1 is a perspective view showing one example of the gear assembly to which the present disclosure applied;
Fig. 2 is a schematic illustration showing a situation of the gear assembly in which the first rotary shaft is inclined longitudinally;
Fig. 3 is a schematic illustration showing a situation of the gear assembly in which the first rotary shaft inclined laterally;
Fig. 4 is a schematic illustration showing the plane of action of the gear assembly;
Fig. 5 is a graph indicating a result of a fundamental test for investigating changes in the transmission efficiency of the gear assembly while applying a low torque to the rotary shaft;
Fig. 6 is a graph indicating a result of a fundamental test for investigating changes in the transmission efficiency of the gear assembly while applying a high torque to the rotary shaft;
Fig. 7 is a graph indicating a result of a first retest for investigating changes in the transmission efficiency of the gear assembly while reducing rigidity of the first gear;
Fig. 8 is a graph indicating a result of a second retest for investigating changes in the transmission efficiency of the gear assembly while reducing rigidity of the first gear;
Fig. 9 is a graph indicating a result of a third retest for investigating changes in the transmission efficiency of the gear assembly while reducing rigidity of the first gear;
Fig. 10 is a perspective view showing one example of the rigidity reducing portion formed on the gear assembly shown in Fig. 1;
Fig. 11 is a cross-sectional view showing an example in which the rigidity reducing portions are formed on both faces of the first gear;
Fig. 12 is a cross-sectional view showing an example in which the rigidity reducing portion is formed on one of faces of the first gear, and;
Fig. 13 is a cross-sectional view showing an example in which the rigidity reducing portion is formed on the other face of the first gear.

### DETAILED DESCRIPTION OF THE PREFERRED EMBODIMENT(S)

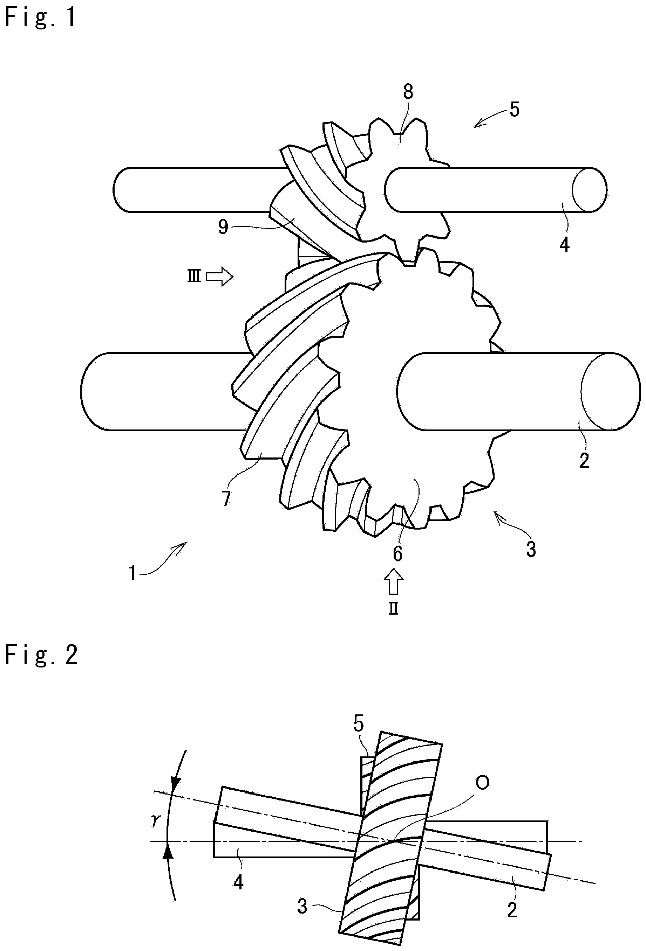

Example embodiments of the present disclosure will now be explained with reference to the accompanying drawings. Turning now to Fig. 1, there is shown one example of the gear assembly according to the present disclosure. The gear assembly 1 comprises a first rotary shaft 2, a first gear 3 formed on the first rotary shaft 2 in such a manner as to rotate integrally therewith, a second rotary shaft 4 extending parallel to the first rotary shaft 2, and a second gear 5 formed on the second rotary shaft 4 in such a manner as to rotate integrally therewith and to be meshed with the first gear 3. An outer diameter (or a pitch circle) of the first gear 3 is larger than an outer diameter (or a pitch circle) of the second gear 5. In Fig. 1, although a helical gear in which gear teeth are set at a predetermined angle with respect to a center axis is depicted as an example, the present disclosure may also be applied to other kinds of gears such as a spur gear in which teeth are formed parallel to a center axis.

The first gear 3 includes a first base portion 6 also known as a rim, a web and a hub that is fitted onto the first rotary shaft 2, and first gear teeth 7 formed on an outer circumferential face of the first base portion 6. For example, the first base portion 6 of the first gear 3 may be splined onto the first rotary shaft 2 in such a manner as to rotate integrally with the first rotary shaft 2 while being allowed to reciprocate on the first rotary shaft 2. Instead, the first base portion 6 of the first gear 3 may also be formed integrally with the first rotary shaft 2 to be rotated integrally with the first rotary shaft 2 while being restricted to reciprocate on the first rotary shaft 2.

Likewise, the second gear 5 includes the second base portion 8 fitted onto the second rotary shaft 4, and second gear teeth 9 formed on an outer circumferential face of the second base portion 8. As the first gear 3, the second base portion 8 of the second gear 5 may be not only splined onto the second rotary shaft 4 but also formed integrally with the second rotary shaft 4.

Both of the first gear 3 and the second gear 5 are conventional involute gears, and gear specifications and surface accuracies of the first gear teeth 7 and the second gear teeth 9 are adjusted in accordance with a predetermined operating condition determined based on a mode value of an input power governed by a transmission torque and a rotational speed. Specifically, specifications of the first gear 3 and the second gear 5 such as helix angles and pressure angles of the first gear teeth 7 and the second gear teeth 9 are set based on a maximum input torque to the gear assembly 1 and a predetermined mode value of an input power that is applied to the gear assembly 1 most frequently. In addition, surface accuracies or surface profiles of the first gear teeth 7 and the second gear teeth 9, that is, errors in helix angles and pressure angles of the first gear teeth 7 and the second gear teeth 9 are adjusted in such a manner that the first gear teeth 7 and the second gear teeth 9 are contacted to each other in the most preferable condition when the gear assembly 1 is operated by the predetermined input power that is applied to the gear assembly 1 most frequently. Here, definition of the "pressure angle error" is a difference between a greatest pressure angle and a smallest pressure angle in a tooth depth direction (as defined by JIS B 1757-2: 2010), and definition of the "helix angle error" is a difference between a greatest helix angle and a smallest helix angle in a tooth trace direction.

Specifically, the surface accuracies of the first gear teeth 7 and the second gear teeth 9 are adjusted to optimize a contact condition between the first gear teeth 7 and the second gear teeth 9 based on results of an experiment carried out while transmitting the power that is applied to the gear assembly 1 most frequently. The results of such experiment include: deflections of the first base portion 6, the second base portion 8, the first gear teeth 7 and the second gear teeth 9; deformations and displacements of the first rotary shaft 2 and the second rotary shaft 4, and bearings (not shown) supporting the first rotary shaft 2 and the second rotary shaft 4; and deformations of casings (not shown) holding the bearings.

That is, when transmitting different power from the aforementioned predetermined power that is applied to the gear assembly 1 most frequently, the deflections or deformations of the first base portion 6, the second base portion 8, the first gear teeth 7, the second gear teeth 9, the first rotary shaft 2 and the second rotary shaft 4 may be changed from those of a case of transmitting the predetermined power applied to the gear assembly 1 most frequently.

Fig. 2 shows a situation of the gear assembly 1 seen in the direction II shown in Fig. 1, in which the first rotary shaft 2 is inclined longitudinally with respect to a rotational center O of the first gear 3 resulting from a change in the input power during torque transmission. In this situation, the first gear 3 is inclined longitudinally with respect to the second gear 5. Consequently, in a zone of action, a timing of commencement of engagement between the first gear tooth 7 of the first gear 3 and the second gear tooth 9 of the second gear 5 may be advanced or delayed from an expected timing. Likewise, a timing of disengagement between the first gear tooth 7 of the first gear 3 and the second gear tooth 9 of the second gear 5 may also be advanced or delayed from an expected timing.

Since the helical teeth are meshed in crossed orientations, in a plane of action of the gear pair within the zone of action, a tooth flank of one of helical teeth of a drive gear first makes contact to a tooth face of one of helical teeth of driven gear at a single point at one side of the gear pair. A contact area between the helical teeth grows gradually to a maximum, and then recedes gradually. Eventually, a tooth face of said one of helical teeth of the drive gear makes contact to a tooth flank of said one of the helical teeth of the driven gear, and the contact area between the helical teeth further reduces until the helical teeth break contact at a single point on the opposite side. If the timing of commencement of engagement between the helical teeth is advanced or delayed in the event of a misalignment of the helical gear pair, in the zone of action, a contact area of any one of the tooth face and the tooth flank of the drive gear to the helical tooth of the driven gear becomes larger than a contact area of the other one to the helical tooth of the driven gear. Specifically, the contact area between the helical teeth is calculated as a cumulative value of the contact area from the commencement of the teeth contact to the termination of the teeth contact.

In the following explanation, a tooth contact condition in which the contact area of the tooth flank becomes larger than the contact area of the tooth face will be called the "flank contact", and a tooth contact condition in which the contact area of the tooth face becomes larger than the contact area of the tooth flank will be called the "face contact".

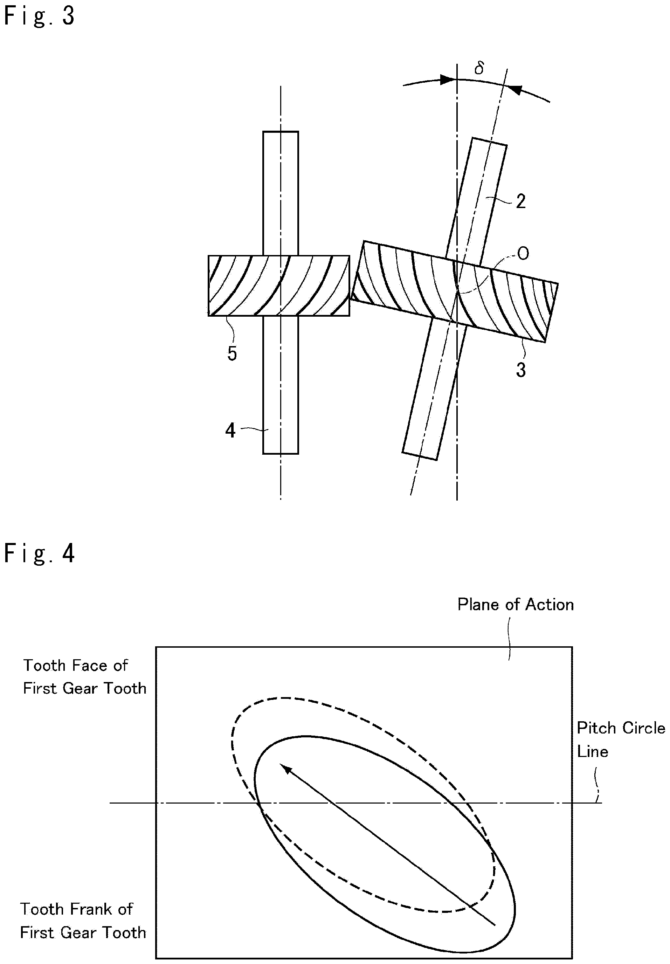

Fig. 3 shows a situation of the gear assembly 1 seen in the direction III shown in Fig. 1, in which the first rotary shaft 2 is inclined laterally with respect to the rotational center O of the first gear 3 resulting from a change in the input power or the like. In this situation, the first gear 3 is inclined laterally with respect to the second gear 5, and hence the first gear tooth 7 of the first gear 3 in the zone of action is inserted deeply between the second gear teeth 9 of the second gear 5. Consequently, the first gear 3 is brought into the flank contact, and the second gear 5 is brought into the face contact.

In a case of a pair of spur gears, gear teeth are meshed parallel with each other in the plane of action, a line of contact is inclined when the rotary shaft(s) is/are inclined resulting from a change in the input power or the like. Consequently, the above-explained flank contact or the face contact of the gear teeth may also be caused.

Fig. 4 shows a displacement of the contact area of the first gear tooth 7 in the plane of action of the gear assembly 1 resulting from an occurrence of the flank contact. In Fig. 4, the dashed oval represents a contact area of the first gear teeth 7 of the case in which the first gear teeth 7 is brought into contact to the second gear teeth 9 in the most preferable condition, and the solid oval represents a contact area of the first gear teeth 7 of the case in which the tooth flank of the first gear teeth 7 is improperly brought into contact to the second gear teeth 9 (i.e., in the case of the flank contact). As described, the helical teeth are meshed in crossed orientations in the plane of action, and an engagement between the first gear tooth 7 of the first gear 3 and second gear tooth 9 of the second gear 5 progresses in the direction along a helix curve. In the example shown in Fig. 4, the engagement between the first gear tooth 7 and the second gear tooth 9 progresses in the direction from the right lower corner to the left upper corner as indicated by the arrow. Specifically, in the zone of action, the tooth flank of the first gear tooth 7 first makes contact to the tooth face of the second gear tooth 9, and eventually the tooth face of the first gear tooth 7 makes contact to the tooth frank of the second gear tooth 9.

When the gear assembly 1 is operated properly as indicated by the dashed oval, in the zone of action, the tooth flank and the tooth face of the first gear tooth 7 are contacted substantially equally to the second gear tooth 9 across the pitch circle line. By contrast, when the flank contact is caused by a change in the input power or the like as indicated by the solid oval, in the zone of action, a contact area of the tooth flank of the first gear teeth 7 is increased larger than a contact area of the tooth face of the first gear teeth 7. Likewise, when the tooth contact is caused by a change in the input power or the like, in the zone of action, a contact area of the tooth face of the first gear teeth 7 is increased larger than a contact area of the tooth flank of the first gear teeth 7.

A power loss of the gear assembly may be calculated by multiplying a friction coefficient of a surface of the gear tooth, a load applied to the gear tooth, and a slip rate on the surface of the gear tooth. Since the slip rate is increased in proportion to a distance from the pitch circle line, transmission efficiency of the gear assembly may be reduced in the event of the flank contact and tooth contact.

Inventors of the present disclosure investigated changes in the transmission efficiency of the gear assembly 1 depending on the teeth contact condition by experiment. In a first fundamental test, the transmission efficiency of the gear assembly 1 was calculated as a ratio of a power applied to the second rotary shaft 4 to a power detected from the first rotary shaft 2. Specifically, in the first fundamental test, the transmission efficiency of the gear assembly 1 was obtained while adjusting an input power to the second rotary shaft 4 in such a manner as to achieve the most preferable teeth contact condition.

Then, in a second fundamental test, the transmission efficiency of the gear assembly 1 was obtained by applying the same power to the second rotary shaft 4 while temporarily adjusting the error in pressure angle of the first gear teeth 7 in such a manner as to cause the flank contact. Specifically, the flank contact of the first gear 3 may be caused by increasing a pressure angle of the tooth flank of each of the first gear teeth 7, or by reducing a pressure angle of the tooth face of each of the first gear teeth 7.

By contrast, in a third fundamental test, the transmission efficiency of the gear assembly 1 was obtained by applying the same power to the second rotary shaft 4 while temporarily adjusting the error in pressure angle of the first gear teeth 7 in such a manner as to cause the face contact. Specifically, the face contact of the first gear 3 may be caused by increasing a pressure angle of the tooth face of each of the first gear teeth 7, or by reducing a pressure angle of the tooth flank of each of the first gear teeth 7.

Other specifications of the first gear 3 and the second gear 5 were not changed in the first to third fundamental tests.

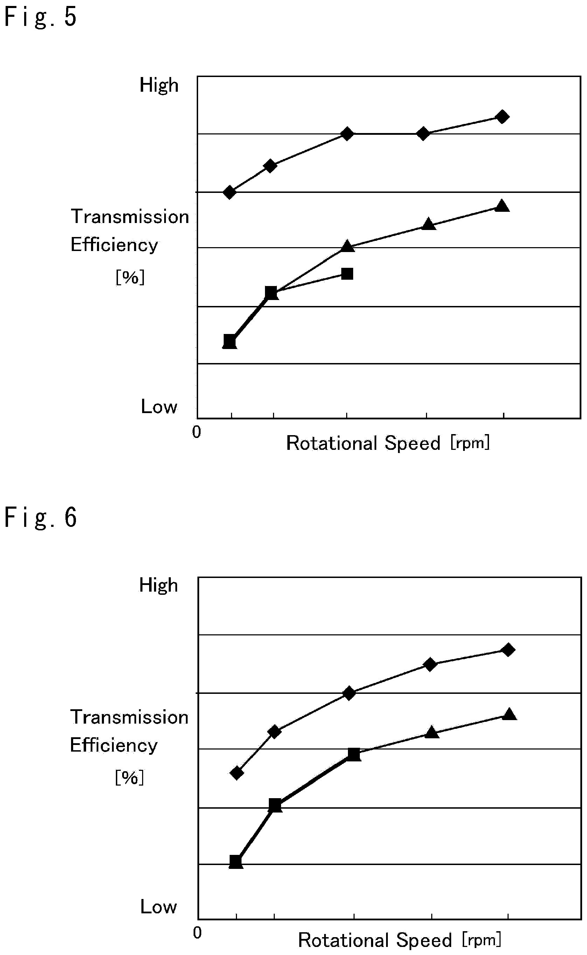

Results of the fundamental tests are shown in Figs. 5 and 6. In Figs. 5 and 6, the vertical axis individually represents a transmission efficiency of the gear assembly 1, and the horizontal axis individually represents a rotational speed of the first rotary shaft 2 or second rotary shaft 4. Specifically, Fig. 5 shows results of a case in which an input torque to the second rotary shaft 4 was low, and Fig. 6 shows results of a case in which an input torque to the second rotary shaft 4 was high. In Figs. 5 and 6, "◆" represents a result of the first fundamental test, "■" represents a result of the second fundamental test, and "▲" represents a result of the third fundamental test.

As can be seen from Figs. 5 and 6, the transmission efficiency of the gear assembly 1 was reduced in the event of the face contact and the flank contact irrespective of a transmission torque and a rotational speed of the shaft.

The inventors of the present disclosure also investigated changes in the transmission efficiency of the gear assembly 1 depending on rigidity or hardness of the first base portion 6 of the first gear 3 by experiment.

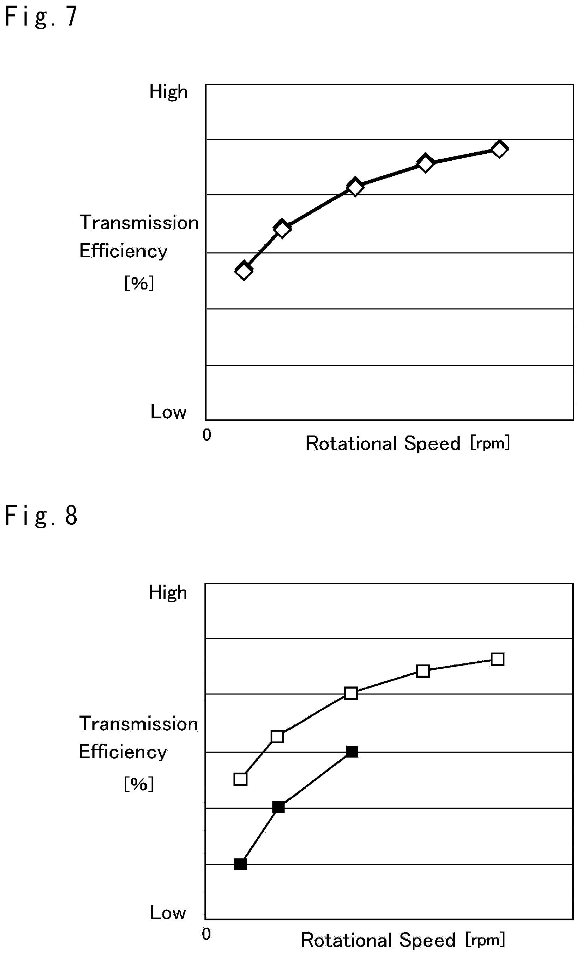

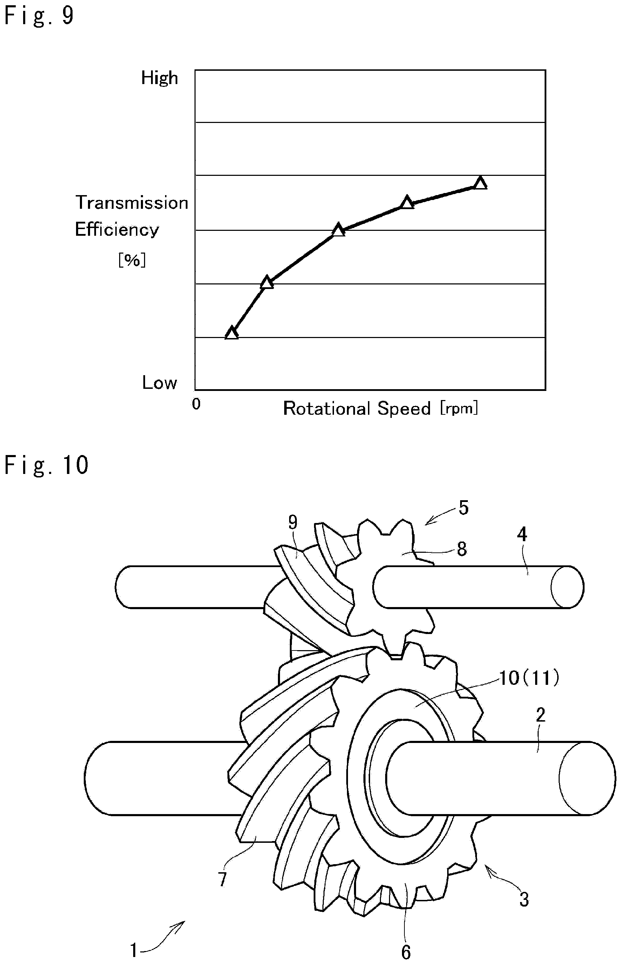

In a first retest, the transmission efficiency of the gear assembly 1 was obtained in the conditions as the first fundamental test while temporarily reducing rigidity of the first base portion 6, and a result is shown in Fig. 7. In a second retest, the transmission efficiency of the gear assembly 1 was obtained in the conditions as the second fundamental test while temporarily reducing rigidity of the first base portion 6, and a result is shown in Fig. 8. In a third retest, the transmission efficiency of the gear assembly 1 was obtained in the conditions as the third fundamental test while temporarily reducing rigidity of the first base portion 6, and a result is shown in Fig. 9. In Fig. 7, "◊" represents a result of the first retest and "◆" represents the result of the first fundamental test, in Fig. 8, "□" represents a result of the second retest and "■" represents the result of the first fundamental test, and in Fig. 9, "Δ" represents a result of the third retest and "▲" represents the result of the third fundamental test.

As can be seen from Figs. 7 and 9, even if the rigidity of the first base portion 6 was reduced, the transmission efficiency of the gear assembly 1 was not changed in the case that the gear assembly 1 was operated in the proper teeth contact condition, and in the case that the gear assembly 1 was operated in the face contact condition.

However, as can be seen from Fig. 8, the transmission efficiency of the gear assembly 1 was improved by reducing the rigidity of the first base portion 6 in the case that the gear assembly 1 was operated in the flank contact condition. Thus, as a result of the second retest, the inventors have confirmed a fact that a difference between the contact area of the tooth flank and the contact area of the tooth face was reduced by reducing the rigidity of the first base portion 6 in the case that the gear assembly 1 was operated in the flank contact condition. That is, it was confirmed that the contact area of the first gear tooth 7 was moved from the tooth flank side to the tooth face side.

In order to improve the transmission efficiency of the gear assembly 1, according to the embodiments of the present disclosure, a rigidity reducing portion 10 as a groove is formed in the first base portion 6 of the first gear 3 which might cause the flank contact. In the first gear 3, therefore, rigidity and section modules of the first base portion 6 is partially reduced by the rigidity reducing portion 10 to be lower than the rigidity of the remaining portion and the rigidity of the second base portion 8 of the second gear 5. However, the rigidity of the first base portion 6 is still maintained sufficiently to transmit the maximum input torque to the gear assembly 1.

According to the embodiments of the present disclosure, therefore, the base portion 6 of the first gear 3 is deformed during power transmission thereby preventing displacement of the contact portion of the first gear tooth 7. That is, in the first gear tooth 7, the difference between the contact area of the tooth flank and the contact area of the tooth face can be reduced. For this reason, reduction in the transmission efficiency of the gear assembly 1 can be prevented. In addition, reduction in the transmission efficiency of the gear assembly 1 can be prevented by reducing the rigidity of only one of the gears.

A manufacturing method of the gear assembly 1 will be explained hereinafter. First of all, the first gear 3 and the second gear 5 are formed in such a manner as to achieve a predetermined specification and tooth surface accuracies. Specifically, the first gear 3 and the second gear 5 are formed in such a manner as to achieve the most preferable teeth contact condition when transmitting the predetermined power applied to the gear assembly 1 most frequently. Then, the first gear 3 and the second gear 5 are assembled to form the gear assembly 1, and an amount of misalignment is measured while transmitting a power different from the predetermined power. The amount of misalignment includes a parallelism between the first rotary shaft 2 and the second rotary shaft 4. Such parallelism may be measured not only by experiment but also by simulation.

Then, a tooth profile of each of the first gear teeth 7 and the second gear teeth 9 is obtained by a measurement or based on design values. Thereafter, contact portions of the first gear tooth 7 and the second gear tooth 9 in the plane of action, and contact areas of the first gear tooth 7 and the second gear tooth 9 in the plane of action are individually obtained by simulation. Thereafter, the gear causing the flank contact is identified based on the contact portions and the contact areas. Specifically, in the first gear teeth 7 of the first gear 3, the contact area between the tooth flank and the second gear tooth 9 in the plane of action is compared to the contact area between the tooth face and the second gear tooth 9 in the plane of action. Optionally, in the second gear teeth 9 of the second gear 5, the contact area between the tooth flank and the first gear tooth 7 in the plane of action is compared to the contact area between the tooth face and the first gear tooth 7 in the plane of action. For example, given that the contact area of the tooth flank of first gear tooth 7 is larger than the contact area of the tooth face of first gear tooth 7, the first gear 3 is identified as the gear expected to cause the flank contact. In this case, the rigidity reducing portion 10 is formed on the base portion 6 of the first gear 3 to partially decrease a thickness of the base portion 6. Specifically, a groove or a hole(s) is/are formed on the base portion 6. By contrast, given that the contact area of the tooth flank of the first gear tooth 7 is smaller than the contact area of the tooth face of first gear tooth 7, the rigidity reducing portion 10 is formed on the second base portion 8 of the second gear 5.

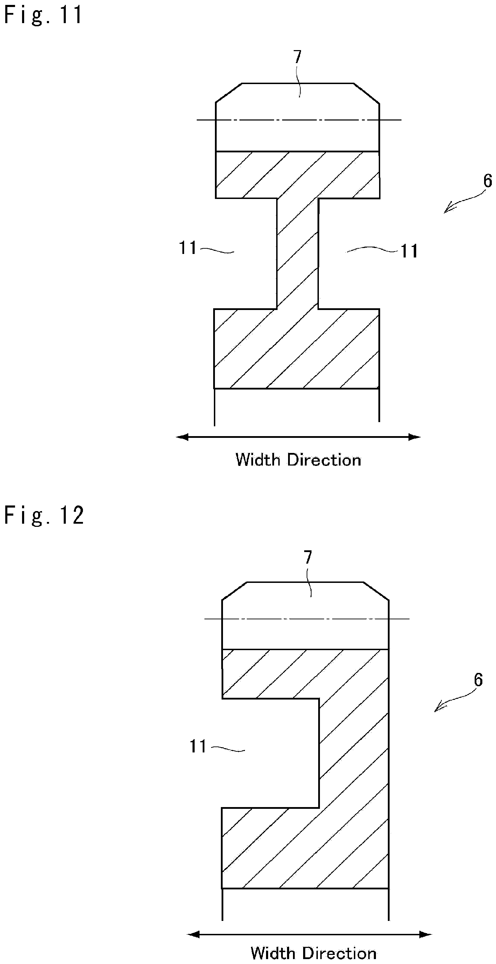

Hereinafter, examples of the rigidity reducing portion 10 will be explained with reference to Figs. 11 to 13. In the following examples, the rigidity reducing portion 10 is formed on the base portion 6 of the first gear 3. In the example shown in Fig. 11, an annular groove 11 is formed on one face of the base portion 6, and another annular groove 11 is formed on the other face of the base portion 6. In this case, when at least one of the first rotary shaft 2, the second rotary shaft 4, the bearing and a casing etc. is deformed during torque transmission, the base portion 6 is warped so that the first gear tooth 7 in the zone of action is displaced in a rotational direction along a helix curve. Consequently, the flank contact is dissolved. In other words, a displacement of the contact portion of the first gear tooth 7 in the zone of action can be corrected to prevent a reduction in the transmission efficiency of the gear assembly 1.

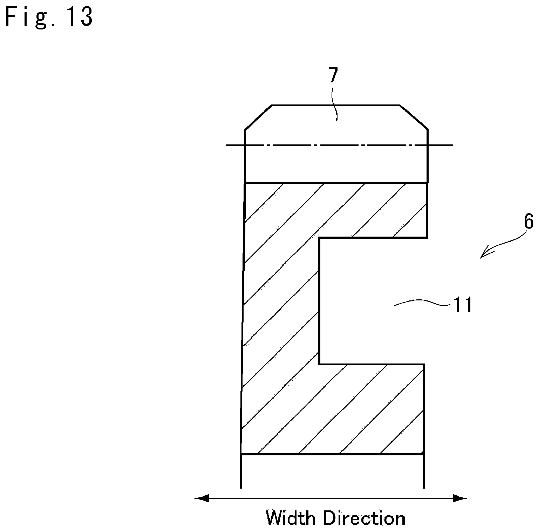

When the deformation of the above-mentioned members is caused, in the plane of action, the contact portion of the first gear tooth 7 may also be displaced in the width direction of the first gear 3. In order to prevent a reduction in the transmission efficiency of the gear assembly 1 resulting from such widthwise displacement of the contact portion of the first gear tooth 7, as illustrated in Figs. 12 and 13, the annular groove 11 may also be formed only on one face of the base portion 6. Specifically, the annular groove 11 is formed on a same side of the base portion 6 as the direction of the widthwise displacement of the contact portion of the first gear tooth 7. In this case, the base portion 6 is allowed to be warped to lean the first gear tooth 7 in the plane of action in the same direction as the widthwise displacement of the contact portion of the first gear tooth 7. For this reason, twist of the first gear tooth 7 can be avoided even if first gear tooth 7 is unevenly loaded.

In this case, the base portion 6 is also warped by the deformation of the above-mentioned members so that the first gear tooth 7 in the zone of action is displaced in a rotational direction along a helix curve. Consequently, the flank contact is dissolved to prevent a reduction in the transmission efficiency of the gear assembly 1.

If the second gear 5 is diametrically smaller, a grove or the like may not be formed on the second base portion 8 to reduce a thickness of the second base portion 8 while achieving the required gear specification, even if the flank contact is expected to be caused in second gear 5. In this case, the pressure angle error of each of the first gear teeth 7 of the first gear 3 which might cause the face contact may be adjusted in such a manner that a thickness of the tooth flank is increased. Alternatively, the pressure angle error of each of the second gear teeth 9 of the second gear 5 which is expected to cause the flank contact may be adjusted in such a manner that a thickness of the tooth face is increased. Instead, the pressure angle error of each of the first gear teeth 7 of the first gear 3 which might cause the face contact may be adjusted in such a manner that a thickness of the tooth face is decreased. Alternatively, the pressure angle error of each of the second gear teeth 9 of the second gear 5 which is expected to cause the flank contact may be adjusted in such a manner that a thickness of the tooth flank is decreased.

In the above-explained case, the pressure angle errors of the first gear teeth 7 of the first gear 3 and the second gear teeth 9 of the second gear 5 are adjusted within a range possible to achieve the most preferable teeth contact condition.

For this reason, even if an occurrence of the flank contact of the second gear 5 is expected, reduction in the transmission efficiency of the gear assembly 1 can be prevented by thus adjusting the pressure angle errors of the first gear teeth 7 of the first gear 3 and the second gear teeth 9 of the second gear 5 while maintaining the preferable teeth contact condition.

In order to maintain the rigidity of the first base portion 6 of the first gear 3 within a desirable range, a depth and a width of the groove 11 may be altered arbitrarily. In addition, the first base portion 6 may be formed of material with low Young's modules to reduce the rigidity thereof. For example, the first base portion 6 may be partially formed of aluminum alloy, magnesium alloy, plastic, carbon fiber reinforced plastic or the like. In this case, the remaining portion of the first base portion 6 may be formed of low carbon steel.

Although the above exemplary embodiment of the present application have been described, it will be understood by those skilled in the art that the present application should not be limited to the described exemplary embodiment, and various changes and modifications can be made within the spirit and scope of the present application. For example, the present disclosure may also be applied to a gear assembly in which one of gears is an internal gear in which an outer circumference thereof is connected to a cylindrical rod. In addition, the present disclosure may also be applied to a gear assembly in which one of shafts are inhibited to rotate.

## Claims

1. A gear assembly (1) comprising:
a first gear (3) including a first base portion (6), and first gear teeth (7) formed on the first base portion (6); and
a second gear (5) including a second base portion (8), and second gear teeth (9) formed on the second base portion (8);
**characterized in that**:
the first base portion (6) of the first gear (3) is arranged around a first shaft member (2);
the second base portion (8) of the second gear (5) is arranged around a second shaft (4) in such a manner that the second gear teeth (9) are meshed with the first gear teeth (7);
the gear assembly (1) is designed in such a manner that the first gear tooth (7) and the second gear tooth (9) are contacted to each other in the most preferable condition in a plane of action when operated in a predetermined condition; and
a rigidity reducing portion (10, 11) is formed on the first base portion (6) to avoid an increase in a contact area between a tooth flank of the first gear tooth (7) and the second gear tooth (9) in the plane of action when the gear assembly (1) is operated in a condition different from the predetermined condition.

2. The gear assembly (1) as claimed in claim 1, wherein rigidity of the rigidity reducing portion (10, 11) formed on the first base portion (6) is lower than rigidity of the second base portion (8) of the second gear (5).

3. The gear assembly (1) as claimed in claim 1 or 2, wherein the rigidity reducing portion (10, 11) is formed of material with lower Young's modules than that of the remaining portion of the first base portion (6).

4. The gear assembly (1) as claimed in any of claims 1 to 3, wherein section modules of the rigidity reducing portion (10, 11) is lower than that of the remaining portion of the first base portion (6).

5. The gear assembly (1) as claimed in any of claims 1 to 4, wherein the rigidity reducing portion (10, 11) is formed on the first base portion (6) in such a manner as to partially reduce a thickness of the first base portion (6).

6. The gear assembly (1) as claimed in any of claims 1 to 5,
wherein the rigidity reducing portion (10, 11) includes a groove (11), and
wherein the groove (11) is formed on at least one of faces of the first base portion (6).

7. The gear assembly (1) as claimed in any of claims 1 to 6, wherein a pressure angle error of each of the first gear teeth (7) is individually adjusted in such a manner that a contact area between the tooth flank of the first gear tooth (7) and the second gear tooth (9) in the plane of action becomes larger than a contact area between the tooth face of the first gear tooth (7) and the second gear tooth (9) in the plane of action when the gear assembly (1) is operated in the condition different from the predetermined condition.

8. The gear assembly (1) as claimed in claim 7, wherein a thickness of the tooth flank of each of the first gear teeth (7) is individually increased from the thickness designed to be operated in the predetermined condition, or a thickness of the tooth face of each of the first gear teeth (7) is individually decreased from the thickness designed to be operated in the predetermined condition.

9. The gear assembly (1) as claimed in any of claims 1 to 8, wherein a pressure angle error of each of the second gear teeth (9) is individually adjusted in such a manner that a contact area between the tooth face of the second gear tooth (9) and the first gear tooth (7) in the plane of action becomes larger than a contact area between the tooth flank of the second gear tooth (9) and the first gear tooth (7) in the plane of action when the gear assembly (1) is operated in the condition different from the predetermined condition.

10. The gear assembly (1) as claimed in claim 9, wherein a thickness of the tooth flank of each of the second gear teeth (9) is individually decreased from the thickness designed to be operated in the predetermined condition, or a thickness of the tooth face of each of the second gear teeth (9) is individually increased from the thickness designed to be operated in the predetermined condition.

11. A manufacturing method of a gear assembly (1) in which first gear teeth (7) of a first gear (3) arranged on a first shaft (2) and second gear teeth (9) of a second gear (5) arranged on a second shaft (4) are meshed to transmit power, comprising:
forming the first gear (3) and the second gear (5) in such a manner that the first gear tooth (7) and the second gear tooth (9) are contacted to each other in the most preferable condition in a plane of action when operating the gear assembly (1) in a predetermined condition;
comparing a contact area between a tooth flank of the first gear tooth (7) and the second gear tooth (9) in a plane of action to a contact area between a tooth face of the first gear tooth (7) and the second gear tooth (9) in the plane of action, while operating the gear assembly (1) in a condition different from the predetermined condition; and
thereafter forming a rigidity reducing portion (10, 11) on a first base portion (6) of the first gear (3) formed around the first shaft (2), in a case that the contact area between the tooth flank of the first gear tooth (7) and the second gear tooth (9) in the plane of action is larger than the contact area between the tooth face of the first gear tooth (7) and the second gear tooth (9) in the plane of action; or
forming the rigidity reducing portion (10, 11) on a second base portion (8) of the second gear (5) formed around the second shaft (4), in a case that the contact area between the tooth flank of the first gear tooth (7) and the second gear tooth (9) in the plane of action is smaller than the contact area between the tooth face of the first gear tooth (7) and the second gear tooth (9) in the plane of action.

12. The manufacturing method of a gear assembly (1) as claimed in claim 11, wherein the rigidity reducing portion (10, 11) is formed by reducing a thickness of the first base portion (6) or the second base portion (8).
